(19)

Europäisches
Patentamt
European
Patent Office
Office européen
des brevets

(11) **EP 2 500 543 A1**

(12) **EUROPEAN PATENT APPLICATION**
published in accordance with Art. 153(4) EPC

(43) Date of publication:
**19.09.2012 Bulletin 2012/38**

(21) Application number: **10830018.7**

(22) Date of filing: **12.11.2010**

(51) Int Cl.:
*F02B 23/06* (2006.01)     *F02F 3/26* (2006.01)
*F02M 61/14* (2006.01)     *F02M 61/18* (2006.01)

(86) International application number:
**PCT/JP2010/070195**

(87) International publication number:
**WO 2011/059059 (19.05.2011 Gazette 2011/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.11.2009 JP 2009258556**

(71) Applicants:
• **Toyota Jidosha Kabushiki Kaisha
Toyota-shi, Aichi-ken, 471-8571 (JP)**
• **Kabushiki Kaisha Toyota Jidoshokki
Kariya-shi
Aichi-ken 448-8671 (JP)**

(72) Inventors:
• **INAGAKI, Kazuhisa
Aichi-gun
Aichi 480-1192 (JP)**
• **MIZUTA, Jun'ichi
Aichi-gun
Aichi 480-1192 (JP)**

• **UEDA, Matsuei
Aichi-gun
Aichi 480-1192 (JP)**
• **FUYUTO, Takayuki
Aichi-gun
Aichi 480-1192 (JP)**
• **KAWAGUCHI, Akio
Toyota-shi
Aichi 471-8571 (JP)**
• **HASHIZUME, Takeshi
Toyota-shi
Aichi 471-8571 (JP)**
• **KAWAE, Tsutomu
Kariya-shi
Aichi 448-8671 (JP)**
• **KUZUYAMA, Hiroshi
Kariya-shi
Aichi 448-8671 (JP)**

(74) Representative: **Intès, Didier Gérard André et al
Cabinet Beau de Loménie
158, rue de l'Université
75340 Paris Cedex 07 (FR)**

(54) **DIESEL ENGINE**

(57) When diffusion combustion is performed, a squash flow (24) flows from a squash area (22) into a cavity portion (12b) during the compression stroke, the squish flow (24) is generated to form in the cavity portion (12b) a longitudinal vortex flow, in which a flow at an portion in the cylinder, has a velocity component directed inward in a radial direction of the cylinder and a flow at a lower portion in the cylinder has a velocity component directed outward in a radial direction of the cylinder. Fuel is injected from nozzle holes (13a) at injector (13), which is disposed top face the center portion of the cavity portion to to an outer peripheral portion of the cavity portion (12b), and a ratio between the diameter or the cavity and the diameter of a cylinder bore falls within a range of 0.66 to 0.76.

FIG. 2

**Description**

TECHNICAL FIELD

The present invention relates to a diesel engine, and particularly to a diesel engine which has a cavity formed in a piston top surface facing a cylinder inferior and an injector for injecting fuel into the cylinder through nozzle holes disposed to face the center portion of the cavity.

BACKGROUND ART

There is a known compression ignition type internal combustion engine (diesel engine) which attains ignition combustion of fuel by injecting the fuel into a combustion chamber during a compression stroke before 60° substantially before compression top dead center or an intake stroke, setting a mean particle diameter of the injection fuel during the compression stroke to a particle diameter (or less) such that a fuel particle temperature reaches the boiling point of the main fuel component, which is determined according to the pressure in the vicinity of compression top dead center or after compression top dead center, controlling an exhaust gas recirculaiion rate (EGR rate) to about 40% or more to prevent vaporization of the fuel from the fuel particles due to boiling until reaching a vicinity of compression top dead center after the injection, and boiling and vaporizing the fuel of the fuel particle after the vicinity of compression top dead center to attain ignition combustion of the fuel (see, for example, the following Patent Literature 1). This compression ignition type internal combustion engine disperse fuel particles having a quite particle diameter of 500 $\mu$m or more into the combustion chamber, and attains ignition combustion of the fuel of these fuel particles after compression top dead center, thereby reducing nitrogen oxide ($NO_x$) and soot at the same time.

Additionally, in the compression ignition type internal combustion engine (diesel engine), premixed charge compression ignition combustion (PCCI combustion) is performed in order to self-ignite a premixture of fuel and intake gas formed in the cylinder i so as to reduce $NO_x$ and soot. To perform the premixed charge compression ignition combustion, EGR gas volume (EGR rate) supplied to the intake side by way of an EGR valve is increased to be larger than in performing diffusion combustion (normal combustion).

CITATION LIST

Parent LITERATURE

Patent Literature 1: JP 09-287527 A
Patent Literature 2: JP 3751462 B

Non-Patent LITERATURE

Non-Patent Literature 1: Kazuhisa INAGAKI, et.al., "Universal Diesel Engine Simulator (UniDES) 1st Report: Phenomenological Multi-zone PDF Model for Predicting the Transient Behavior of Diesel Engine Combustion", SAE Paper 2008-01-0843, Society of Automotive Engineers, 2008.
Non-Patent Literature 2: Ryo Kitabatake, et.a., "Expansion of premixed charge compression ignition combustion region by using electro-hydraulic derive camless valve system", Proc. of annual congress of Society of Automotive Engineers of Japan, No. 48-08, 233-20085275, May 2008.

SUMMARY OF THE INVENTION

TECHNICAL PROBLEMS

In a diesel engine, it is desirable that an operation range of premixed charge compression ignition combustion can be increased in order to reduce the emission of NOx, soot, and the like. For this purpose, it is desired that the concentration of the premixture formed in the cylinder is homogenized by decreasing the diameter of the nozzle holes of the injector and injecting into the cylinder a fusel spray having a small penetration force. However, when the fuel spray having a small penetration force is injected into the cylinder to perform diffusion combustion, a dispersion range of the fuel spray decreases to deteriorate mixing with the air in the cylinder, and a smoke concentration tends to increase, especially under high-load operation (when a fuel injection amount is large). To suppress the smoke concentration, the fuel injection amount must be limited, which results in a decrease in the torque produced by diffusion combustion.

The present invention aims to suppress lowering of the torque of the diesel engine produced by the diffusion combustion even when fuel spray having a small penetration force is injected into the cylinder.

SOLUTION TO THE PROBLEMS

The diesel engine according to the present invention has adopted the following means in order to achieve the above-described object.

The diesel engine according to the present invention is a diesel engine in which a cavity is formed in a top surface of a piton facing the interior of a cylinder and an injector is disposed to face the center portion of the cavity to inject fuel through its nozzle holes into the cylinder, such that when diffusion combustion is performed, a squish flow flows from a squish area between a portion on an outer peripheral side of the cavity in the piston top surface and a cylinder head into the cavity during the compression stroke, and the squish flow is generated to form in the cavity a longitudinal vortex flow, in which a flow at an upper portion in the cylinder has a velocity component directed inward in a radial direction of the cylinder and a flow at a lower portion in the cylinder has a velocity component directed outward in a radial direction of the cylinder; the injector injects the fuel from the nozzle holes to an outer peripheral portion of the cavity; and a ratio between the diameter of the cavity and the diameter of a cylinder bore falls within a range of 0.66 to 0.76.

According to one embodiment of the present invention, it is assumed that a standard spray axis connects the nozzle hole with an intersection between a straight line which is parallel to a cylinder central axis and passes through a maximum diameter position at a side surface of the cavity and a straight line which is perpendicular to the straight line and the cylinder central axis and passes through a maximum depth position at the bottom surface of the cavity, and when the fuel is injected from the nozzle hole, an inclination angle of a spray axis in the vertical direction of the cylinder with respect to the standard spray axis falls within a range of -1° to 5° when an inclination angle toward an upper part of the cylinder is defined as positive and an inclination angle toward a lower part of the cylinder is defined as negative.

Moreover, the diesel engine according to the present invention is a diesel engine in which a cavity is formed in a top surface of a piston facing the interior of a cylinder and an injector is disposed two face the center portion of the cavity to inject fuel through its nozzle holes into the cylinder, such that the cavity is formed in the top surface of the piston facing the interior of the cylinder and the injector is disposed to face the center portion of the cavity to inject the fuel through its nozzle holes into the cylinder, wherein when diffusion combustion is performed, a squish flow flows from a squish area between a portion on an outer peripheral side of the cavity in the piston top surface and a cylinder head into the cavity during the compression stroke, and the squish flow is generated two form in the cavity a longitudinal vortex flow, in which a flow at an upper portion in the cylinder has a velocity component directed inward in a radial direction or the cylinder and a flow at a lower portion in the cylinder has a velocity component directed outward in a radial direction of the cylinder; the injector injects the fuel from the nozzle holes to an outer peripheral portion of the cavity; and it is assumed that a standard spray axis connects the nozzle hole with an intersection between a straight line which is parallel to a cylinder central axis and passes through a maximum diameter position at a side surface of the cavity and a straight line which is perpendicular to the straight line and the cylinder central axis and passes through a maximum depth position at the bottom surface of the cavity, and when the fuel is injected from the nozzle hole, an inclination angle of a spray axis in the vertical direction of the cylinder with respect to the standard sprays axis falls within a range of -1° to 5° when an inclination angle toward an upper part of the cylinder is defined as positive and an inclination angle toward a lower part of the cylinder is defined as negative.

According to an embodiment of the present intention, the swirl ratio preferably falls within a range of 1.0 or less. Moreover, according to another embodiment of the present invention, the nozzle holes preferably have a diameter of 0.09 mm or less. Further, according to yet another embodiment of the present invention, the nozzle holes preferably have a diameter of 0.10 mm or less. Moreover, according to still another embodiment of the present intention, the number of the nozzle holes preferably falls within a range of 14 to 24. Further, according to yet another embodiment of the present invention, a depth of the outer peripheral portion of the cavity is preferably larger than that of the center portion. In addition, according to still another embodiment of the present invention, preferably, either the diffusion combustion or the premixed charge compression ignition combustion is performed selectively.

Also, the gist of a determination method of the diameter of the nozzle holes of the diesel engine according to the present invention lies in that the diameter of the nozzle hole; is determined according to or relationship between an indicated mean effective pressure at the premixed charge compression ignition combustion and the diameter of the nozzle holes.

ADVANTAGEOUS EFFECTS OF THE INVENTION

According to the present invention, even when a fuel spray having a small penetration force is injected into the cylinder to perform diffusion combustion by a diesel engine, mixing with cylinder air can be promoted by extending a dispersion range of the fuel spray by means of a squish flow, and the generation of smoke can be suppressed. As a result, there can be suppressed a decrease in the torque produced by the diffusion combustion.

BRIEF DESCRIPTION OF THE DRAWINGS

[FIG. 1] A schematic diagram showing the structure of a diesel engine according to an embodiment of the invention.
[FIG. 2 ] A schematic diagram showing the structure the diesel engine according to the embodiment of the invention.
[FIG. 3] A schematic diagram showing the structure of the diesel engine according to the embodiment of the invention.
[FIG. 4] A diagram explaining an example of conditions for switching between diffusion combustion and premixed charge compression ignition combustion.
[FIG. 5A] A diagram explaining a flowing direction of a longitudinal vortex flow when a swirl ratio is large.
[FIG. 5B] A diagram explaining a flowing direction of a longitudinal vortex flow when a swirl ratio is large.
[FIG. 6A] A diagram explaining a flowing direction of a longitudinal vortex flow when a swirl ratio is small.
[FIG. 6B] A diagram explaining a flowing direction of a longitudinal vortex flow when a swirl ratio is small.
[FIG. 7] A diagram showing the results obtained by calculating a gas velocity distribution within a cylinder when a swirl ratio is varied.
[FIG. 8A] A diagram showing an example structure of intake ports.
[FIG. 8B] A diagram showing another example structure of intake ports.
[FIG. 9A] A diagram explaining a measuring method of a swirl ratio.
[FIG. 9B] A diagram explaining a measuring method of a swirl ratio.
[FIG. 10A] A diagram explaining a flow of a longitudinal vortex flow when a ratio Dcav/Dbore between a cavity diameter Dcav and a cylinder bore diameter Dbore is small.
[FIG. 10B] A diagram explaining a flow of a longitudinal vortex flow when a ratio Dcav/Dbore between a cavity diameter Dcav and a cylinder bore diameter Dbore is large.
[FIG. 11A] A diagram explaining the definition of an inclination angle θ of a spray axis with respect to a standard spray axis.
[FIG. 11B] A diagram explaining the definition of an inclination angle θ of a spray axis with respect to a standard spray axis.
[FIG. 12A] A diagram showing a fuel spray when an inclination angle θ of a spray with respect to a standard spray axis is small.
[FIG. 12B] A diagram showing a fuel spray when an inclination angle θ of a spray axis with respect to a standard spray axis is large.
[FIG. 13] A diagram showing experimental results obtained by measuring the indicated mean effective pressure at full load operation by diffusion combustion a a ratio Dcav/Dbore between cavity diameter Dcav and cylinder bore diameter Dbore is varied.
[FIG. 14] A diagram showing experimental results obtained by measuring the indicated mean effective pressure at full load operation by diffusion combustion when an inclination angle θ of the spray axis with respect to a standard spray axis which, is varied.
[FIG. 15A] A diagram showing the results obtained by calculating indicated mean effective pressures at premixed charge compression ignition combustion while nozzle hole diameter is varied.
[FIG. 15B] A diagram showing the results obtained by calculating heat generation rates at premixed charge compression ignition combustion while nozzle hole diameter is varied.
[FIG. 15C] A diagram showing the results obtained by calculating heat generation rates at premixed charge compression ignition combustion while nozzle hole diameter is varied.
[FIG. 16] A diagram showing the results obtained by calculating fuel mass fractions within a cylinder at full load operation.

MODES FOR CARRYING OUT THE INVENTION

Modes (hereinafter referred as as embodiments) of carrying out the present invention are below with reference to the drawings.

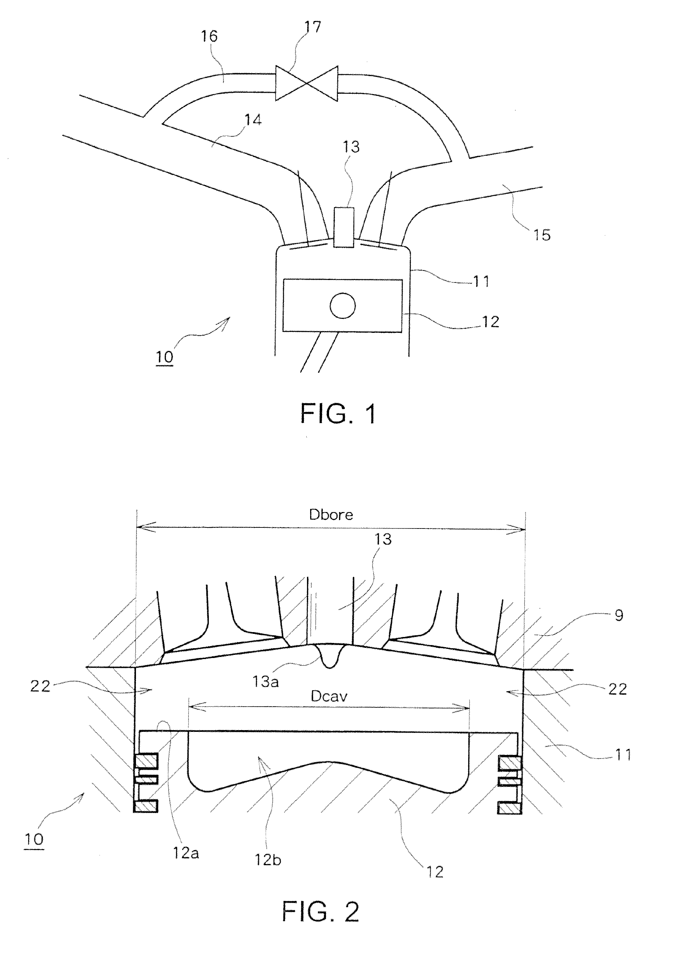

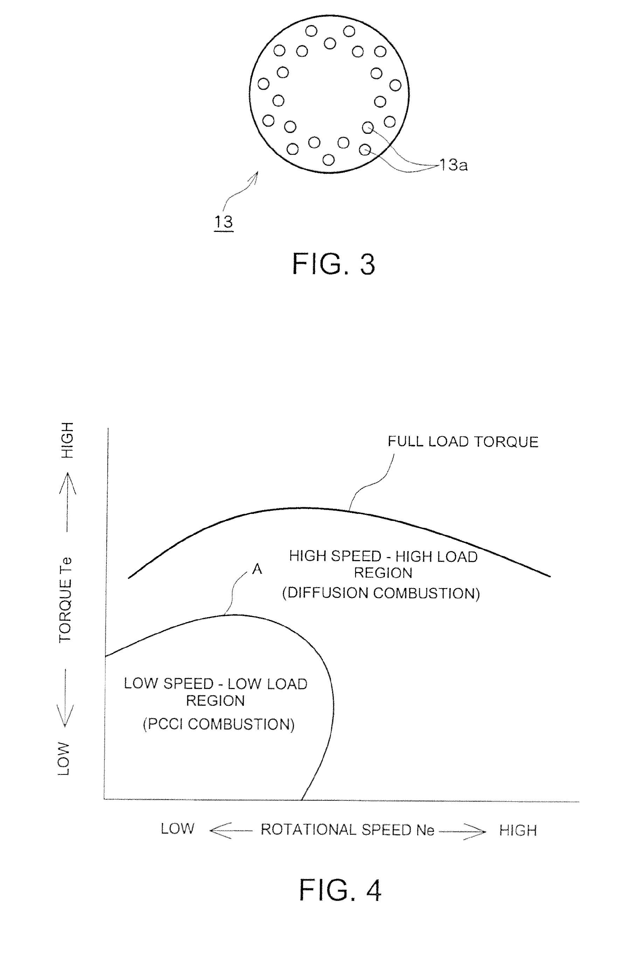

FIGs. 1 to 3 are schematic diagrams showing the structure of a diesel engine (compression ignition type internal combustion engine) 10 according to an embodiment of the invention. FIG. 1 shows an outline of the whole structure, FIG. 2 shows a structure within a cylinder 11, and FIG. 3 shows a structure of a tip end of an injector (fuel injection valve) 13 disposed to face into the cylinder 11. FIGs. 1 and 2 show a structure of one cylinder portion, but the same structure is also applied to a multiple cylinder portion. For example, a piston-crank mechanism can be used to configure the diesel engine 10. The diesel engine 10 takes intake gas (air) into the cylinder 11 through an intake port 14 during an intake stroke and compresses the intake gas, which is taken into the cylinder 11, by means of a piston 12 during a compression stroke. Here, the intake gas into the cylinder, 11 can also be pressurized by an unillustrated supercharger such as a turbocharged. Also, for example, when the piston 12 is positioned near compression top dead center, the fuel in the cylinder 11 self-ignites and combusts (diesel combustion) by direct injection of the fuel (e.g., liquid fuel such as diesel fuel) from the injector 13 into the cylinder 11. After the combustion, exhaust gas is exhausted to an exhaust port 15 during an exhaust stroke, In the diesel engine 10, a reflux passage 16 is disposed to connect the exhaust port 15 and the intake port 14. and after the combustion, exhaust gas recirculation (EGR) is performed to partially supply the exhaust gas as EGR gas to the intake port 14 (intake side) through the reflux passage 16. The reflux passage 16 is provided with an EGR control valve 17; an opening degree of the EGR control valve 17 is controlled to control a reflux volume of the exhaust gas (EGR gas) from the exhaust port 15 to the intake port 14 and to supply to the intake side, and an EGR gas volume (EGR rate) which is taken into the cylinder is controlled.

The diesel engine 10 can not only normal diesel combustion (diffusion combustion) that injects fuel directly into the cylinder 11 near compression top dead center to seff-ignite the fuel in the cylinder 11, but also premixed charge compression ignition combustion (PCCI combustion) that seif-ignites a premixture of fuel and intake gas formed in the cylinder 11. This premixed charge compression ignition combustion can be performed to suppress the generation of smoke. Two perform the premixed charge compression ignition combustion, the fuel is directly injected from the injector 13 into the cylinder 11 during the intake stroke or the compression stroke to form the premixture of fuel and intake in the cylinder 11, and the premixture in the cylinder 11 is compressed by the piston 12 to conduct self-ignition. Preferably, the premixed charge compression ignition combustion is performed by increasing the EGR volume (EGR rate) supplied to the intake side by the EGR to become larger than in performing the diffusion combustion (normal combustion). The EGR gas having a heat capacity higher than that of air (fresh gas) is mixed in a large volume in the intake gas to reduce the concentration of fuel and oxygen in the premixture so as to extend a self-ignition delay time, thereby enabling control of the self-ignition timing of the premixture to the vicinity of compression top dead center. In addition, an inert EGR gas is substantially uniformly dispersed around the fuel and oxygen in the premixture to absorb the heat of combustion, thereby significantly suppressing generation of nitrogen oxides (NOx).

The diesel engine 10 can select whether the diffusion combustion or the premixed charge compression ignition combustion is performed according to its rotational speed Ne and torque Te (load). For example, when the rotational speed Ne and torque Te of the diesel engine 10 are in a low speed-low load region which is a region not exceeding a characteristic curve A shown in FIG. 4, performance of the premixed charge compression ignition combustion is selected. On the other hand, when the rotational speed Ne and torque Te of the diesel engine 10 are in a high speed-high load region which is a region exceeding the characteristic curve A shown in FIG. 4, performance of the diffusion combustion is selected. The diffusion combustion or the premixed charge compression ignition combustion can be performed selectively as the combustion mode of the diesel engine 10 by controlling the fuel injection time to the vicinity of compression top dead center or to the intake stroke (or compression stroke).

As shown in FIG. 2, a cavity portion 12b is formed in a top surface 12a of the piston 12 facing the interior of the cylinder 11. In the example shown in FIG. 2, the shape of the cavity portion 12b is a shallow dish shape, a depth of an outer peripheral portion of the cavity portion 12b is larger than the depth of the center portion of the cavity potion 12b, and the depth of the cavity portion 12b increases gradually from the center portion toward the outer peripheral portion of the cavity portion 12b. The injector 13 is disposed in a cylinder head 9 in a state that its tip end faces the center portion of the cavity portion 12b. As shown in FIG. 3, the injector 13 is a small-diameter multi hole injector in which a large number of small-diameter nozzle holes 13a are formed in the tip end to inject the fuel into the cylinder 11. The large number of nozzle holes 13a are arranged substantially uniformly along the circumferential direction of the injector, and the fuel is radially injected from the individual nozzle holes 13a. Since the small-diameter nozzle holes 13a are formed in a large number, a fuel spray having a small penetration force and a small particle diameter can be injected quickly in a large amount from the individual nozzle holes 13a when the premixed charge compression ignition combustion is performed. Thus, atomization of the fuel spray can be promoted, and a sufficient fuel and air mixing period can be secured. Therefore, a concentration (air-fuel ratio) distribution of the air-fuel mixture formed in the cylinder 11 can be homogenized, and combustion noise can be reduced. As a result, an operation range of premixed charge compression ignition combustion can be extended toward a higher load side, and emission of NOx, soot, and the like can be suppressed.

Meanwhile, in a case where the diffusion combustion (diesel fuel) is performed, the fuel is radially injected from the individual nozzle holes 13a to an outer peripheral portion of the cavity portion 12b in the vicinity of compression top dead center. However, when the diameters of the nozzle holes 13a are reduced, a penetration force of the fuel sprays from the nozzle holes 13a is weakened, and a dispersion range of the fuel sprays tends to be narrowed. Moreover, during the compression stroke (especially, late in the compression stroke), the gas in a squish area 22 which is formed between portion on the outer peripheral side of the cavity portion 12b in the piston top surface 12a and a bottom surface of the cylinder head 9 is pushed out by the movement of the piston 12 toward top dead center two flow into the cavity portion 12b and generates a squish flow. The gas having flowed into the cavity portion 12b because of the squish flow forms a longitudinal vortex flow, and the flows of the fuel sprays injected from the individual nozzle holes 13a toward the outer peripheral portion of the cavity portion 12b are affected by the longitudinal vortex flow (squish flow).

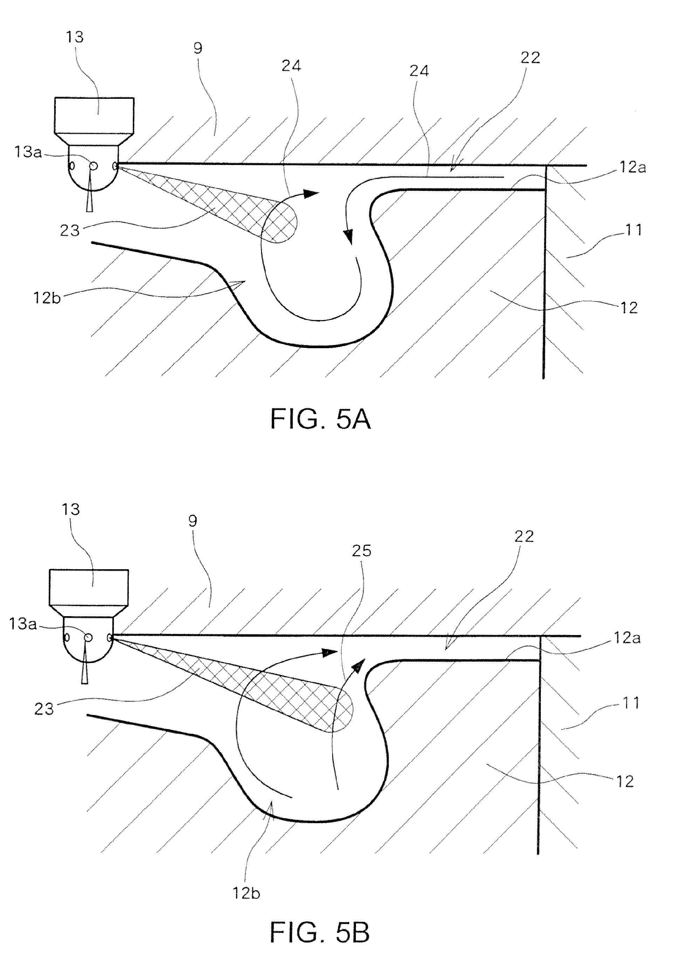

Here, it is assumed, as shown in FIG. 5A, that a longitudinal vortex flow (squish flow) 24 in the cavity portion 12b is in a direction (clockwise in the drawing) such that a flow at an upper portion in the cylinder has a velocity component directed outward in a radial direction of the cylinder and a flow at a lower portion in the cylinder has a velocity component directed inward in a radial direction of the cylinder. Then, a flow of a fusel spray 23 toward the outer peripheral portion of the cavity portion 12b is disturbed by the longitudinal vortex flow 24 in the vicinity of the compression top dead center, thereby reducing the dispersion range of the fuel spray 23. In this case, the fuel spray 23 having a strong penetration force to resist the longitudinal vortex flow 24 is required in order to extent the dispersion range of the fuel spray 23. In addition, during an expansion stroke (especially early in the expansion stroke), a reverse squish flow 25 which moves the gas from the cavity portion 12b to the squish area 22 is generated by the movement of the piston 12 toward bottom dead center as shown in FIG. 5B, and the fuel spray 23 is caused to flow to the squish area 22 by the reverse squish flow 25. When the flow of the fuel spray 23 is overtaken by the reverse squish flow 25, the air of the cavity portion 12b cannot be used for combustion, and the fuel spray 23 is required to have a strong penetration force over the reverse squish flow 25.

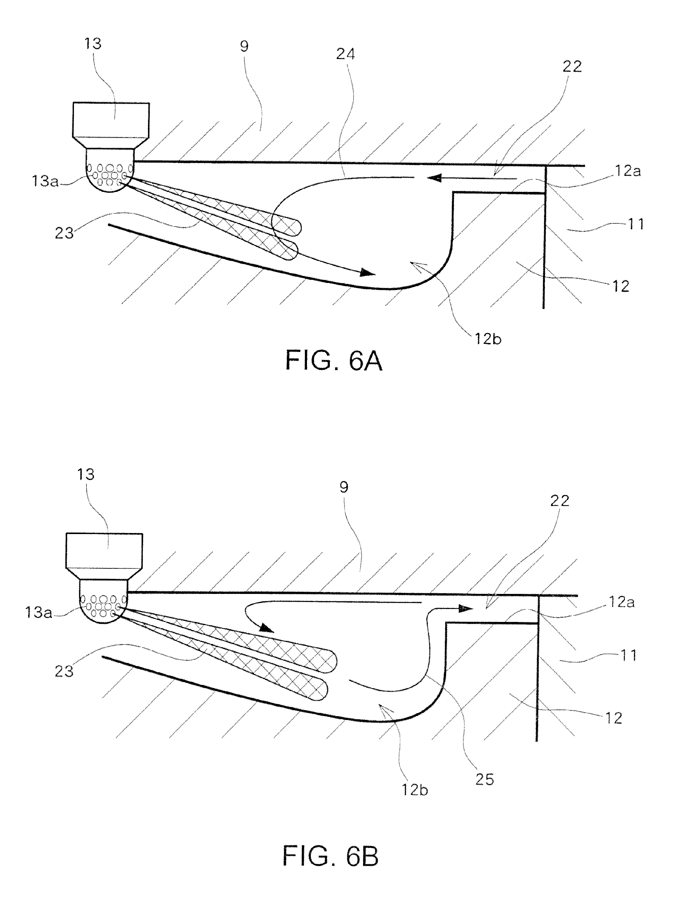

On the other hand, when, as shown in FIG. 6A, the longitudinal vortex flow (squish flow) 24 in the cavity portion 12b is in a flowing direction (counterclockwise in the drawing) having a velocity component which is directed inward in a radial direction of the cylinder at an upper portion in the cylinder and a velocity component which is directed outward in a radial direction of the cylinder at a lower portion in the cylinder, the fuel sprays 23 injected from the individual nozzle holes 13a are carried on the longitudinal vortex flow 24 in the vicinity of compression top dead center and are dispersed toward the outer peripheral portion of the cavity portion 12b. Therefore, even when the fuel sprays 23 have a small penetration force, the longitudinal vortex flow 24 can be used two extend the dispersion range of the fuel sprays 23. In addition, as shown in FIG. 6B, during the expansion stroke (especially early in the expansion stroke), the fuel sprays 23 are carried on the reverse squish flow 25 and are dispersed from the vicinity of the bottom surface of the cavity portion 12b toward the vicinity of an upper part of the side wall.

A turning direction of the longitudinal vortex flow 24 formed in the cavity potion 12b is determined depending on the strength (swirl ratio) of the swirl flow formed in the cylinder 11. When a strong, swirl flow is formed in the cylinder 11 (swirl ratio is large), as shown in FIG. 5A, the gas from the squish area 22 is disturbed from moving inward in a radial direction of the cylinder by the centrifugal force of the swirl flow and flows into the cavity portion 12b along the side wall of the cavity portion 12b. As a result, as shown in FIG. 5A, the longitudinal vortex flow 24 formed in the cavity portion 12b is in a turning direction such that a flow at an upper portion in the cylinder has a velocity component directed outward in a radial direction of the cylinder and a flow at a lower portion in the cylinder has a velocity component directed inward in a radial direction of the cylinder (a flow on an inner side in a radial direction of the cylinder has a velocity component directed upper direction of the cylinder, and a flow on an outer side in a radial direction of the cylinder has a velocity component directed lower direction of the cylinder). In other words, it has a turning direction such that the dispersion of the fuel sprays 23 to the outer peripheral portion of the cavity portion 12b is disturbed. Meanwhile, when the swirl flow is not formed or a weak swirl flow is formed (swirl ratio is small) in the cylinder 11, as shown in FIG. 6A, the gas from the squish area 22 is not disturbed from moving inward in a radial direction of the cylinder by the centrifugal force of the swirl flow and flows into the cavity portion 12b. As a result, as shown in FIG. 6A, the longitudinal vortex flow 24 formed in the cavity portion 12b is in a turning direction such that a flow at the upper portion in the cylinder has a velocity component directed inward in a radial direction of the cylinder, and a flow at the lower portion in the cylinder has a velocity component directed outward in a radial direction of the cylinder (a flow on an inner side in a radial direction of the cylinder has a velocity component directed lower direction of the cylinder, and a flow on an outer side in a radial direction of the cylinder has a velocity component directed upper direction of the cylinder). In other words, it has a turning direction such that the dispersion of the fuel sprays 23 to an outer peripheral portion of the cavity portion 12b is promoted. In this embodiment, in order to disperse the fuel sprays 23 having a small penetration force to a large range when the diffusion combustion is performed, the swirl ratio is determined so as to form in the cavity portion 12b the longitudinal vortex flow 24 is which a flow at an upper portion in the cylinder has a velocity component directed inward in a radial direction of the cylinder and a flow at a lower portion in the cylinder has a velocity component directed outward in a radial direction of the cylinder during the compression stroke (especially, late in the compression, stroke).

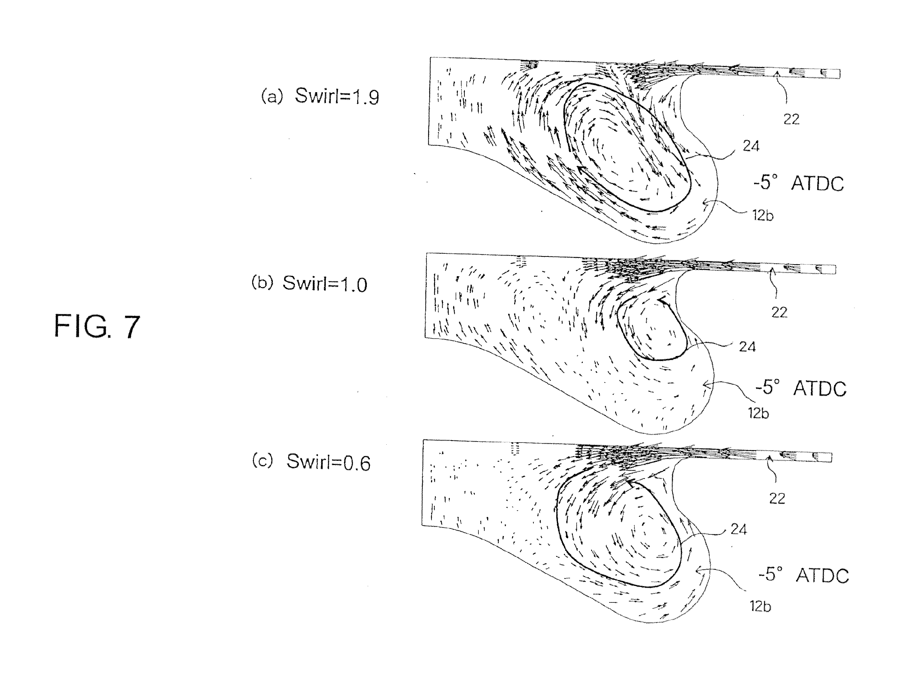

The results of calculating, gas velocity distributions within the cylinder 11 (the cavity portion 12b and the squish area 22) with the swirl ratio changed are shown in FIG. 7. FIG. 7(a) shows a gas velocity distribution when the swirl ratio is 1.9, FIG. 7(b) shows a gas velocity distribution when the swirl ratio is 1.0, and FIG. 7(c) shows a gas velocity distribution when the swirl ratio is 0.6. In FIG. 7, each direction indicated by an arrow shows a gas flowing direction, and the arrow length indicates a gas velocity. For calculation, it is assumed that an engine rotational speed is 1600 rpm and a compression ratio is 14, and a gas velocity distribution 5° before compression top dead center is calculated. When the swirl ratio is 0.6, as shown in FIG. 7(c), there is formed in the cavity portion 12b a strong longitudinal vortex flow 24 in which a flow at an upper portion in the cylinder has a velocity component directed inward in a radial direction of the cylinder and a flow at a lower portion in the cylinder has a velocity component directed outward in a radial direction of the cylinder. When the swirl ratio is 1.0, as shown in FIG. 7(b), there is formed in the cavity portion 12b a weak longitudinal vortex flow 24, in which a flow at an upper portion in the cylinder has a velocity component directed inward in a radial direction of the cylinder and a flow at a lower portion in the cylinder has a velocity component directed outward in a radial direction of the cylinder. Meanwhile, when the swirl ratio is 1.9, as shown in FIG. 7(a) there is formed in the cavity portion 12b a strong longitudinal vortex flow 24, in which a flow at an upper portion in the cylinder has a velocity component directed outward in a radial direction of the cylinder and a flow at a lower portion in the cylinder has a velocity component directed inward in a radial direction of the cylinder. In this embodiment, the swirl ratio is preferably adjusted to fall within a range of 1.0 or less so as to form in the cavity portion 12b, during the compression stroke (especially, late in the compression stroke), the longitudinal vortex flow 24, in which the flow at the upper portion in the cylinder has a velocity component directed inward in a radial direction of the cylinder and the flow at a lower portion in the cylinder, has a velocity component directed outward in a radial direction of the cylinder.

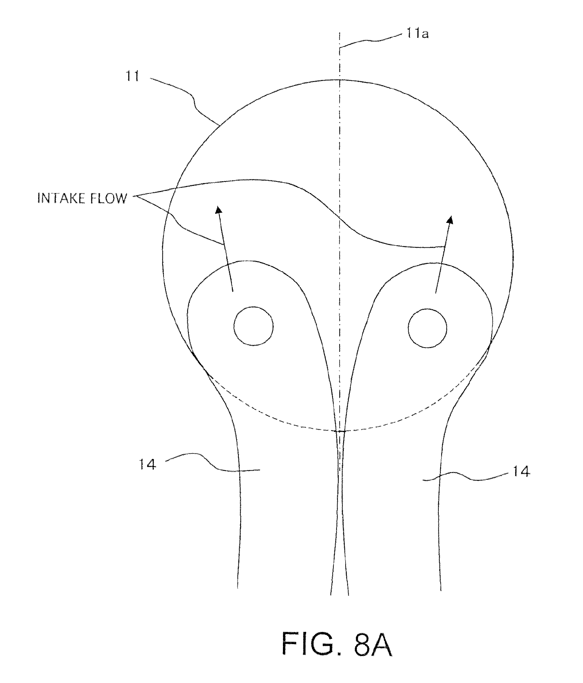

When the swirl ratio is set to, for example, 0 (or almost 0), so as to fall within a range of 1.0 or less; namely, when it is made not to generate a swirl flow in the cylinder 11, a pair of intake ports 14 are configured of straight ports (tangential ports), and the pair of intake ports 14 are disposed symmetrically to each other with respect to a plane 11a passing through the cylinder central axis as shown in, for example, FIG. 8A. In other words, the inclined directions of the pair of intake ports 14 with respect to the plane 1a are opposite each other, and the magnitudes of inclination angles are determined to be the same with respect to the plane 11a. In the example structure shown in FIG. 8A, swirl components (turning components in the cylinder circumferential direction) of intake flows flowing from the individual intake ports 14 into the cylinder 11 cancel each other, so that the swirl flow is not generated in the cylinder 11, and the swirl ratio become 0 (or almost 0).

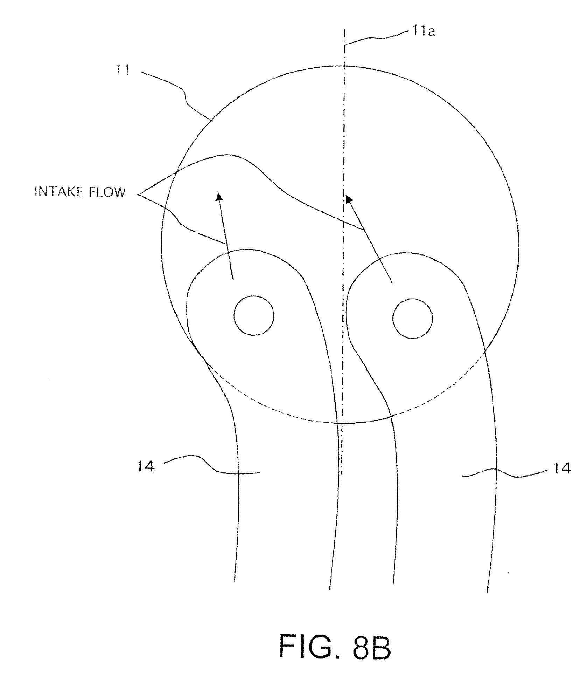

Moreover, when the swirl ratio is set to, for example, a low value of about 0.6, so as to fall within a range of 1.0 or less; namely, when it is made to generate a weak swirl flow in the cylinder 11, a pair of intake ports 14 are configured of straight ports (tangential ports), and the pair of intake ports 14 are disposed asymmetrically to each other with respect to the plane 11a passing through the cylinder central axis as shown in, for example, FIG. 8B. In the example structure shown in FIG. 8B, the inclination directions of the pair of intake ports 14 with respect to the plane 11a are the same as each other. The ranges of the inclination angles of the pair of intake ports 14 with respect to the plane 11a are brought mutually closer, so that the swirl components (turning component in the cylinder circumferential direction) of the intake flows which flow from the individual intake ports 14 into the cylinder 11 do not cancel each other, and a weak swirl flow is generated in the cylinder 11. In addition, a value of the swirl ratio can be adjusted by adjusting a difference of the inclination angles of the individual intake ports 14 with respect to the plane 11a. For example, when the inclination directions of the individual intake ports 14 with respect to the plane 11a are the same as each other, the value of the swirl ratio can be reduced by increasing a difference of the inclination angles of the individual intake ports 14 with to the plane 11a. Moreover, it is also possible to generate a weak swirl flow in the cylinder 11 by configuring one of the intake ports 14 by a straight port and the other intake port 14 by a helical port (swirl port), and the swirl ratio can be adjusted to, for example, a low value of about 0.6, so as to fall within a range of 1.0 or less. Preferably, when a swirl control valve (SCV) is provided and the swirl ratio is variable, the swirl ratio with the swirl valve full open is adjusted to fall within a range of 1.0 or less.

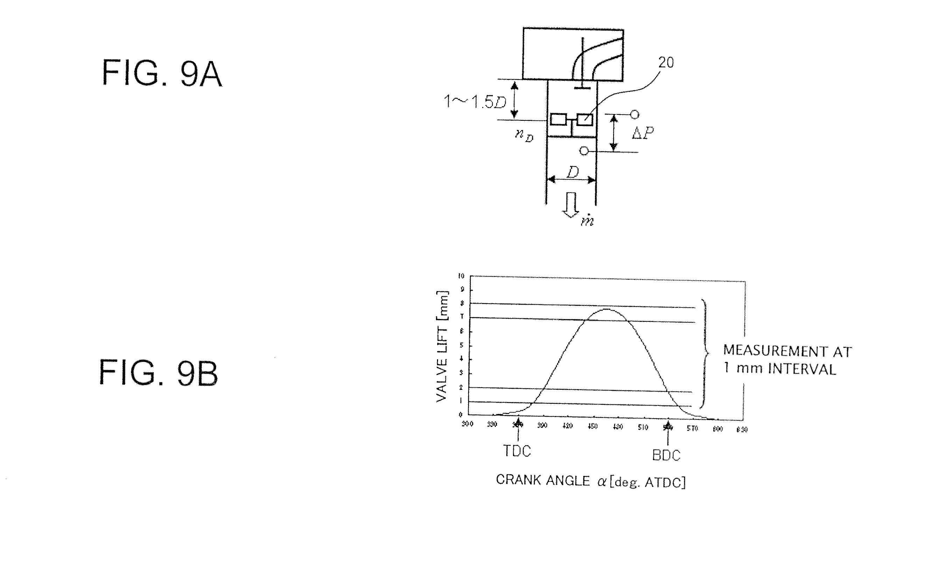

A measuring method of the swirl ratio is described below. To measure the swirl ratio, as shown in FIG. 9A, a vane-type swirl meter 20 is disposed a predetermined distance (e.g., a distance of 1 to 1.5 times a cylinder bore diameter D) from the cylinder-head bottom surface. Moreover, in a case of a certain valve lift 1, an air flow rate dm/dt is adjusted so that a difference ΔP between the inside pressure of the swirl meter (cylinder) and the atmosphere attains a given value (e.g., 2.49 kPa, 254 mm $H_2O$), and an air flow rate dm/dt [g/s] and a vane rotational speed $n_D$ [rps] are recorded. This procedure is performed at intervals of 1 mm until the value lift 1 exceeds a maximum lift as shown in FIG. 9B.

To calculate the swirl ratio, first, a virtual engine rotational speed n [rps] is calculated at each measurement point (each valve lift 1). The virtual engine rotational speed n is expressed by the following formula (1).

[Mathematical formula 1]

$$n = \frac{30 \cdot \dot{m}}{\rho \cdot V_k} \qquad \cdots \ (1)$$

where,

$\rho$ : air density [g/cm$^3$]
$V_k$ : stroke volume of 1-cylinder engine [cm$^3$]
$\dot{m}$ : air flow rate [g/s]

Then, the swirl ratio is accumulated in a period of intake strokes (TDC to BDC). The accumulated swirl ratio is expressed by the following formula (2). In formula (2), $n_D/n$ is calculated by interpolating from each measurement point. Also, $C(\alpha)/C_m$ becomes a function of crank angle $\alpha$ only, independent of the engine rotational speed.
[Mathematical formula 2]

$$ SR = \frac{1}{\pi} \int_{TDC}^{BDC} \left(\frac{n_D}{n}\right)\left(\frac{C(\alpha)}{C_m}\right)^2 d\alpha \qquad \cdots (2)$$

where,

C($\alpha$): piston speed at crank angle $\alpha$
$C_m$: mean piston speed

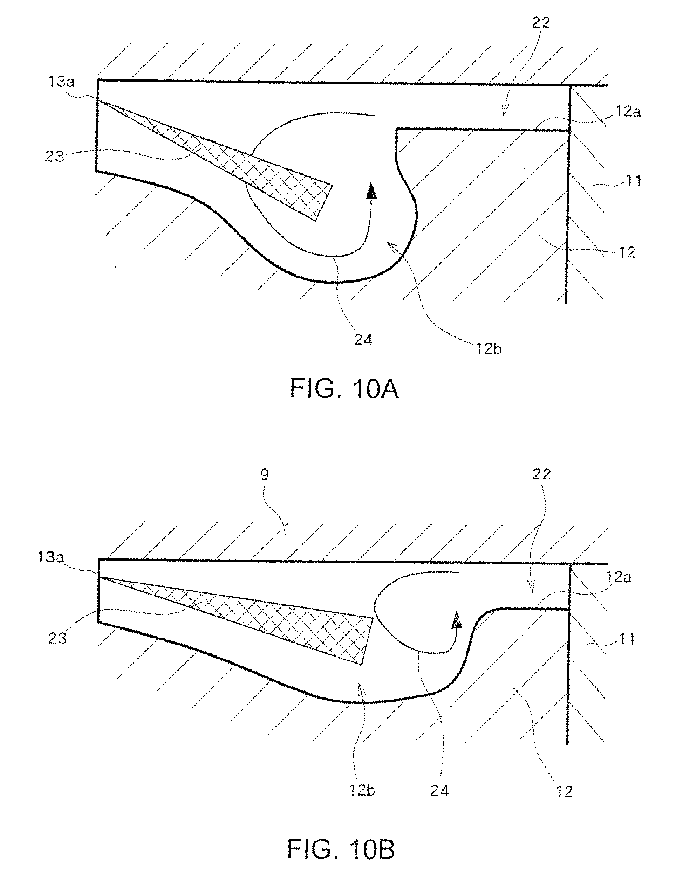

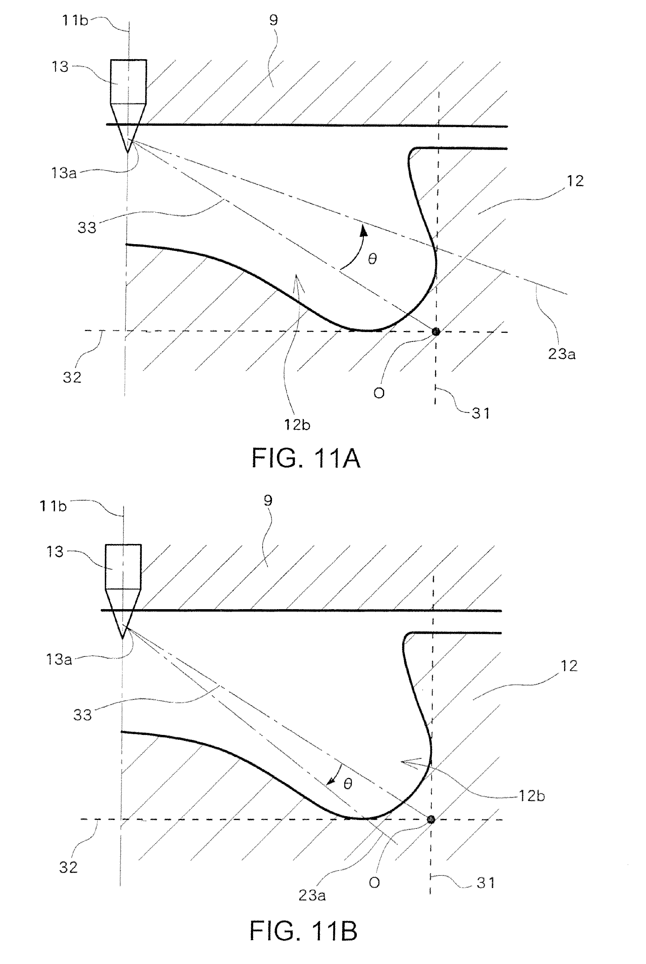

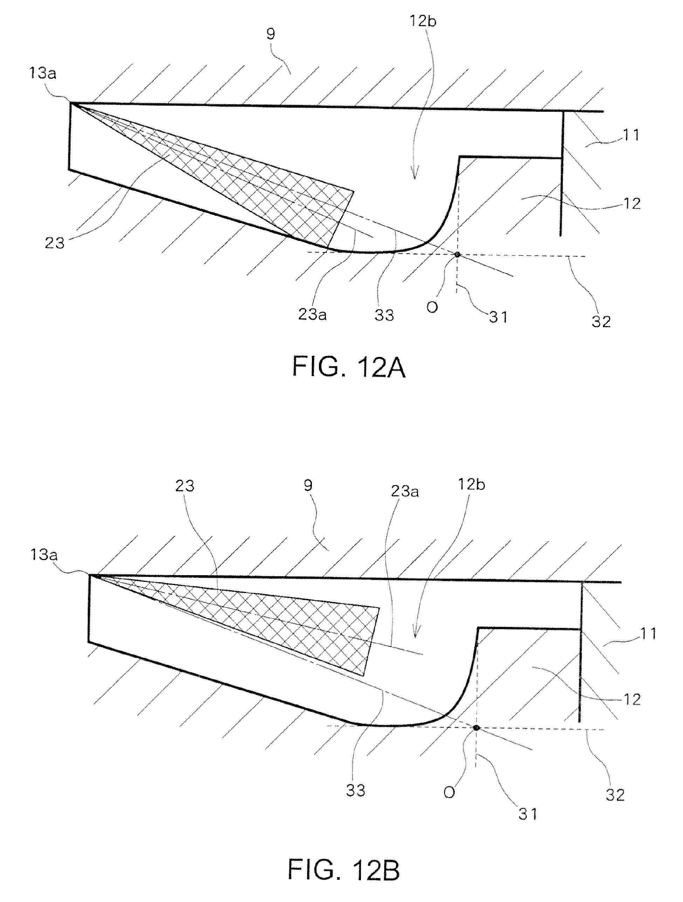

In a case where diffusion combustion is performed, the strength of the squish flow 24 and that of the reverse squish flow 25 effecting the flow of the fuel spray 23 are determined according to a ratio Dcav/Dbore between a diameter (cavity diameter) Dcav of the cavity portion 12b and a diameter (cylinder bore diameter) Dbore of the cylinder bore shown in FIG. 2. When the Dcav/Dbore value is excessively small, the squish flow (longitudinal vortex flow) 24 becomes excessively strong as shown in Fig. 10A, the fuel spray 23 is pushed toward the bottom surface of the cavity portion 12b and comes into contact with the bottom surface of the cavity portion 12b, and the introduction of air is disturbed. Thus, a fuel-rich portion is locally formed, increasing a smoke concentration. In order to suppress the smoke concentration, the fuel injection amount must be limited, and full load torque (full performance) decreases. On the other hand, when the Dcav/Dbore value is excessively large, the squish flow (longitudinal vortex flow) 24 becomes excessively weak as shown in FIG. 10B, the fuel spray 23 is carried on the longitudinal vortex flow 24, action of dispersing outward in a radial direction of the cylinder becomes weak, and mixing of fuel and air in a macro-scale becomes worse. Moreover, since a turbulent flow involved in the longitudinal vortex flow 24 also becomes weak, mixing between fuel and air in a micro-scale also becomes worse, and soot is generated. When the diameter of the cavity portion 12b varies with the direction of depth, Dcav can be defined by the diameter at a position where the cavity diameter is squeezed most to become small.
In addition, when the diffusion combustion is performed and the penetration force of the fuel spray 23 is small, the fuel injection direction from the nozzle hole 13a is suitably directed downward so that the fuel spray 23 is not blasted by the reverse squish flow 25. An optimum fuel injection direction is determined according to the ratio Dcav/Dbore of the cavity diameter Dcav with respect to the cylinder bore diameter Dbore, because it is effected by the strength of the reverse squish flow 25. When the Dcav/Dbore value is small, the reverse squish flow 25 is strong in comparison with it, so that the fuel injection direction is preferably directed further downward so to further decrease the influence of the reverse squish flow 25. On the other hand, when Dcav/Dbore is large, the depth of the cavity portion 12b becomes small under a condition of an equal compression ratio. Therefore, when the fuel injection direction is directed downward excessively, the fuel spray 23 collides against the bottom surface of the cavity portion 12b, and mixing between fuel and air is deteriorated, thereby increasing soot. In this case, since the reverse squish flow 25 is weakened, the fuel injection direction is preferably determined to have a relatively wide angle.
Here, as shown in FIG. 11A, an interjection between a straight line 31, which is parallel to a cylinder central axis 11b and passes through a maximum diameter position at the side surface of the cavity portion 12b, and a straight line 32, which is perpendicular to this straight line 3 and the cylinder central axis 11b and passes through a maximum depth position at the bottom surface of the cavity portion 12b, is determined to be an interjection O, and a standard spray axis 33 which connects the nozzle hole 13a and the intersection O is virtually defined. Moreover, the fuel injection direction from the nozzle hole 13a is defined by an inclination angle $\theta$ of the spray axis 23a in a vertical direction of the cylinder with respect to the standard spray axis 33 at the time when fuel is injected from the nuzzle hole 13a (a time when the fuel injection is started; more specifically, a time when the main spray is started to be injected after a pilot spray is injected). The spray axis 23a here is defined by a central axis of the fuel spray 23 from the nozzle hole 13a, and the inclination angle $\theta$ of the spray axis 23a with respect to the standard spray axis 33 is determined to be positive when the spray axis 23a is inclined upward of the cylinder with respect to the standard spray axis 33 (inclination angle toward the upper part of the cylinder) as shown in FIG. 11A, and it is determined to be negative when the spray axis 23a is inclined downward of the cylinder with respect to the standard spray axis 33 (inclination angle toward the lower part of the cylinder) as shown in FIG. 11B. As shown in FIG. 12A. when the inclination angle θ of the spray axis 23a with respect to the standard spray axis 33 is excessively small (excessively downward), the fuel spray 23 comes into contact with the bottom surface of the cavity portion 12b, and the introduction of air is disturbed. Thus, a fuel-rich portion is locally formed, and the smoke concentration increases as a result. On the other hand, when the inclination angle θ of the spray axis 23a with respect to the standard spray axis 33 is excessively large (excessively upward) as shown in FIG. 12B, air which is in the vicinity of the bottom surface of the cavity portion 12b cannot be used for combustion, and the rich portion tends to generate accordingly, resulting in easy generation or soot.

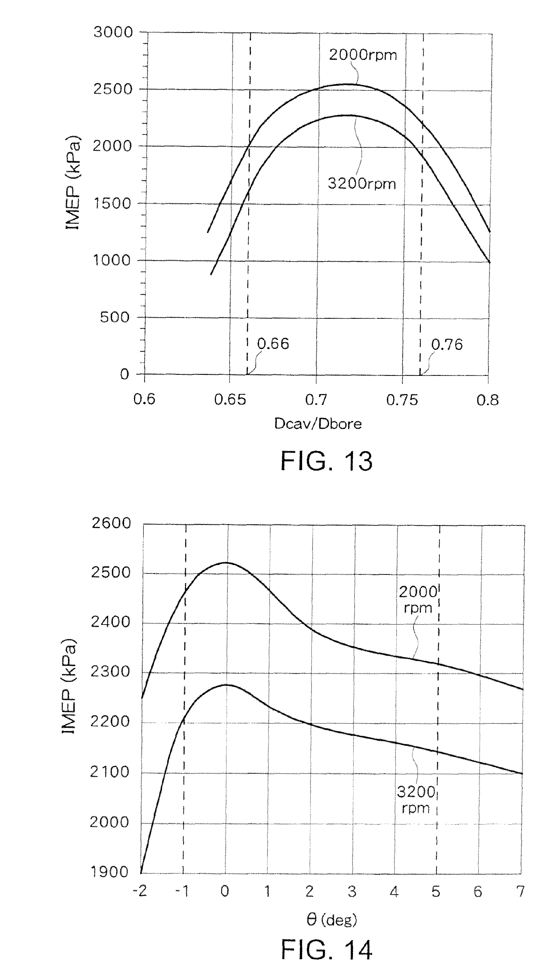

Indicated mean effective pressures (IMEP) Pi at full load operation by the diffusion combustion where measured in an experiment using an actual apparatus when the ratio Dcav/Dbore between the cavity diameter Dcav and the cylinder bore diameter Dbore was changed, and the obtained results are shown in FIG. 13. In the experiment using the actual apparatus, it is determined that the nozzle holes 13a have a diameter φ of 0.08 mm, the number of the nuzzle holes 13a is 18, and the inclination angle θ of the spray axis 23a with respect to the standard spray axis 33 at the fuel injection is 0˚ so as to suppress the generation of smoke and soot. Also, the fuel injection amount is increased until smoke reaches 0.8 FSN at an engine rotational speed of 2000 rpm, and the fuel injection amount is increased until smoke reaches 1.5 FSN at an engine rotational speed of 3200 rpm. As shown in FIG. 13, when the Dcav/Dbore value is 0.71, the indicated mean effective pressure Pi (full load torque) at full load operation becomes maximum, and when the Dcav/Dbore value becomes larger or smaller than 0.71, the indicated mean effective pressure Pi at the full load operation decreases. In addition, when the Dcav/Dbore value becomes smaller than 0.66, the indicated mean effective pressure Pi at the full load operation decreases suddenly (lowering with increases significantly), and the full load torque decreases suddenly. This is because the squish flow (longitudinal vortex flow) 24 becomes excessively strong, the fuel spray 23 comes into contact with the bottom surface of the cavity portion 12b, the introduction of air is disturbed, and smoke is generated easily. Moreover, when the Dcav/Dbore value exceeds 0.76, the indicated mean effective pressure Pi at the full load operation decreases suddenly (a lowering with increases significantly), and the full load torque decreases suddenly. This is because the squash flow (longitudinal vortex flow) 24 becomes excessively weak, the action that the fuel spray 23 is carried on the longitudinal vortex flow 24 to dispersed outward in a radial direction of the cylinder diameter becomes weak, and infixing between fuel and air is degraded.

Therefore, it is determined in this embodiment that the ratio Dcav/Dbore between the cavity diameter Dcav and the cylinder bore diameter Dbore falls within a range of 0.66 or more and 0.76 or less (0.66 to 0.76). Thus, even when the fuel spray 23 having a small penetration force is injected to perform the diffusion combustion, the dispersion range of the fuel spray 23 can be expended by using the squish flow (longitudinal vortex flow) 24, and degradation of mixing with air can be suppressed, so that the generation of smoke can be suppressed. As a result, lowering of the torque at the diffusion combustion can be suppressed, and lowering of the indicated mean effective pressure Pi (full load torque) at the full load operation can be suppressed. Morse preferably, the Dcav/Dbore value is set to 0.71 (or almost 0.71) to further suppress lowering of the full load torque by further suppressing lowering of the torque at the diffusion combustion.

In addition, the indicated mean effective pressures (IMEP) Pi at full load operation by the diffusion combustion where measured in an experiment using an actual apparatus when the inclination angle θ of the spray axis 23a with respect to the standard spray axis 33 at the fuel injection was changed, and the obtained results are shown in FIG. 14. In the experiment using the actual apparatus, it is determined that the nozzle holes 13a have a diameter φ of 0.08 mm, the number of the nozzle holes 13a is 18, and the Dcav/Dbore value is 0.71. Moreover, when the engine rotational speed is 2000 rpm, the fuel infection amount is increased until smoke reaches 0.8 FSN, and when the engine rotational speed is 3200 rpm, the fuel injection amount is increased until smoke reaches 1.5 FSN. As shown in FIG. 14, when the inclination angle θ of the spray axis 23a is 0˚, the indicated mean effective pressure Pi (full load torque) at the full load operation becomes maximum, and when the inclined angle θ of the spray axis 23a becomes larger or smaller than 0˚, the indicated mean effective pressure Pi at the full load operation decreases. Moreover, when the inclined angle θ of the spray axis 23a become smaller than -1˚, the indicated mean effective pressure Pi at full load operation decreases suddenly (lowering with increases significantly), and the full load torque decreases suddenly. This is because the fuel spray 23 comes into contact with the bottom surface of the cavity portion 12b, the introduction of air is disturbed, a fuel-rich portion is locally formed, and smoke is generated easily. Also, when the inclined angle θ of the spray axis 23a becomes larger than 5˚, air in the vicinity of the bottom surface of the cavity portion 12b cannot be used for combustion, and the rich portion is generated easily. As a result, the indicated mean effective pressure Pi at the full load operation decreases significantly, and the full load torque decreases significantly.

Accordingly, in a case where the diffusion combustion is performed in this embodiment, the inclination angle θ of the spray axis 23a in the vertical direction of the cylinder with respect to the standard spray axis 33 is set top fall within a range of -1˚ or more and 5˚ or less (-1˚ to 5˚) when fuel is injected from the nozzle holes 13a (a time when the fuel injection is started; more specifically, a time when the main spray is started two be injected after a pilot spray is injected). This, even when the fuel spray 23 having a small penetration force is injected, mixing of fuel and air can be promoted by using the squish flow (longitudinal vortex flow) 24, and the generation of smoke can be suppressed. As a result, decrease in the torque at the diffusion combustion can be suppressed, as can lowering of the indicated mean effective pressure Pi (full load torque) at the full load operation. Moreover, to further suppress decrease in the full load torque by further suppressing decrease in the torque at the diffusion combustion, more preferably, the inclination angle θ of the spray axis 23a with respect to the standard spray axis 33 is set to 0˚ (or almost 0˚); namely, the spray axis 23a agrees (or almost agrees) with the standard spray axis 33.

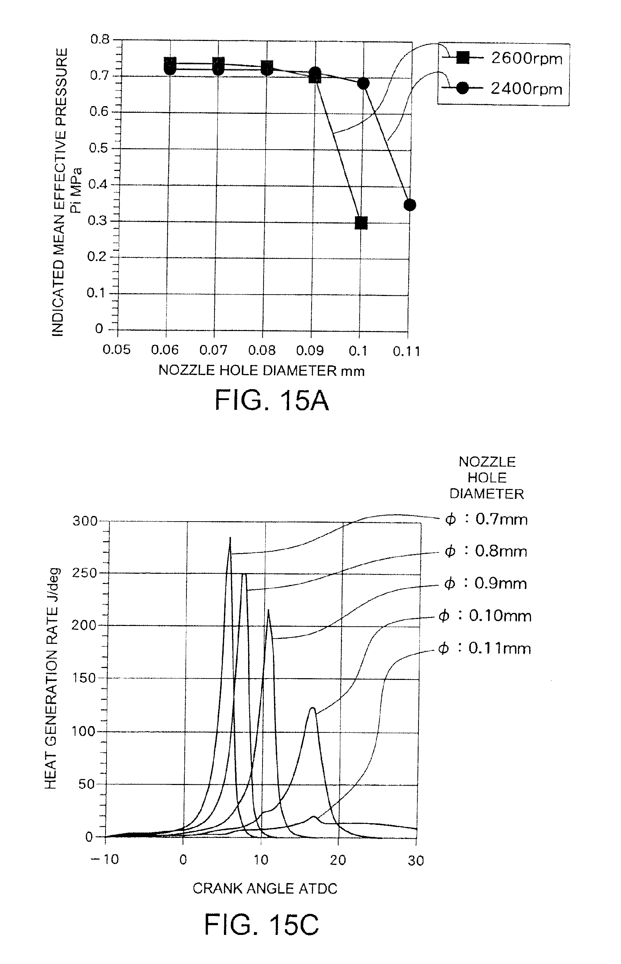

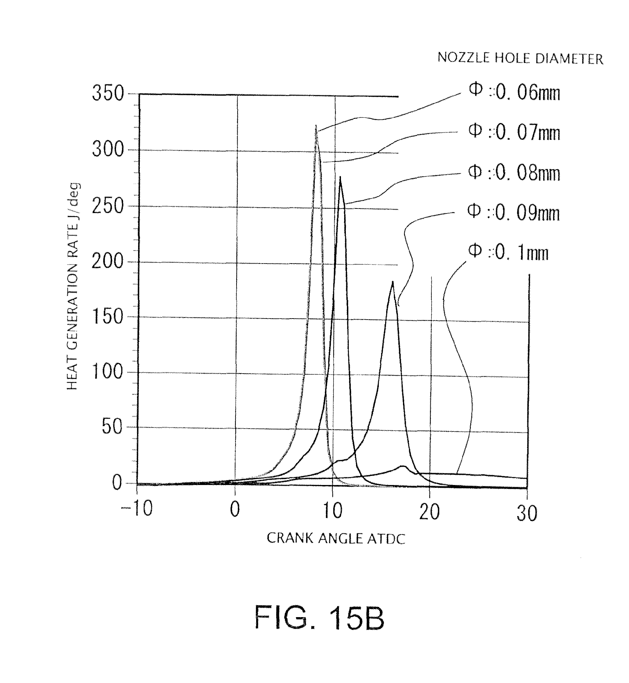

Further, the results obtained by calculating the indicated mean effective pressure Pi at the premixed charge compression ignition combustion with the diameter of the nozzle holes 13a varied are shown in FIG. 15A, and the results obtained by calculating the heat generation rate at the premixed charge compression ignition combustion with the diameter of the nozzle holes 13a varied are shown in FIGs. 15B and 15C. Here, the cycle simulation (UniDES) disclosed in Non-Patent Literature 1 is used to calculate the characteristics of the indicated mean effective pressure Pi with respect to the diameter of the nozzle holes 13a. For calculation, it is determined that the engine rotational speed is 2400 rpm or 2600 rpm, the fuel injection starting time is 30˚ before compression top dead center, the fuel injection amount is 20.3 mg, and the EGR rate is 0%. Under conditions that the engine rotational speed is relatively high at 2400 rpm or 2600 rpm, the PCCI misfires if the air-fuel mixture is formed late. When the nozzle holes 13a have a larger diameter, the atomization of the spray is degraded, resulting in delayed vaporization and formation of the air-fuel mixture, so that misfire tends to occur. When the nozzle holes 13a have a diameter φ exceeding 0.10 mm, the heat generation rate at the premixed charge compression ignition combustion decreases suddenly under a condition of the engine rotational speed of 2400 rpm as shown in FIG. 15C, and the indicated mean effective pressure Pi at the premixed charge compression ignition combustion decreases suddenly as shown in FIG. 15A. Also, when the nozzle holes 13a have a diameter φ exceeding 0.09 mm, the heat generation rate at the premixed charge compression ignition combustion decreases suddenly under a condition of the engine rotational speed of 2600 rpm as shown in FIG. 15B, and the indicated mean effective pressure Pi at the premixed charge compression ignition combustion decreases suddenly as shown in FIG. 15A. Therefore, in this embodiment, the diameter of the nozzle holes 13a is determined according to the relationship between the indicated mean effective pressure Pi at the premixed charge compression ignition combustion and the diameter of the nozzle holes 13a, and the diameter of the nozzle holes 13a is set to a value before the indicated mean effective pressure Pi decreases suddenly. Preferably, the diameter of the nozzle holes 13a is set to 0.10 mm or less so to prevent the torque at the premixed charge compression ignition combustion from decreasing while increasing the operation range of the premixed charge compression ignition combustion. At that time, the diffusion combustion is preferably performed under a condition (e.g., the engine rotational speed of 2600 rpm shown in FIG. 15B) such that the heat generation rate decreases by the premixed charge compression ignition combustion. Moreover, the diameter of the nozzle holes 13a is preferably set two 0.09 mm or less to further increase the operation range of the premixed charge compression ignition combustion without decreasing the torque at the premixed charge compression ignition combustion. In addition, the torque at the premixed charge compression ignition combustion can be further increased by setting the diameter of the nozzle holes 13a to 0.08 mm or less or to its vicinity (e.g., a range of 0.08 mm±5%) or less.

Further, when the number of the nozzle holes 13a is excessively small, the fuel injection period increases, and the smoke concentration tends to increase at the high-load operation. On the other hand, when the number of the nozzle holes 13a is excessively large, the fuel injection mount per unit time increases, and it becomes difficult to inject a very small amount of fuel. In this embodiment, the flow rate of fuel from the nozzle holes 13a preferably does not change greatly from that of a conventional structure (e.g., when ten nozzle holes having a diameter of 0.13 mm are formed), and the number of the nozzle holes 13a is preferably set to fall within a range of, for example, 14 to 24.

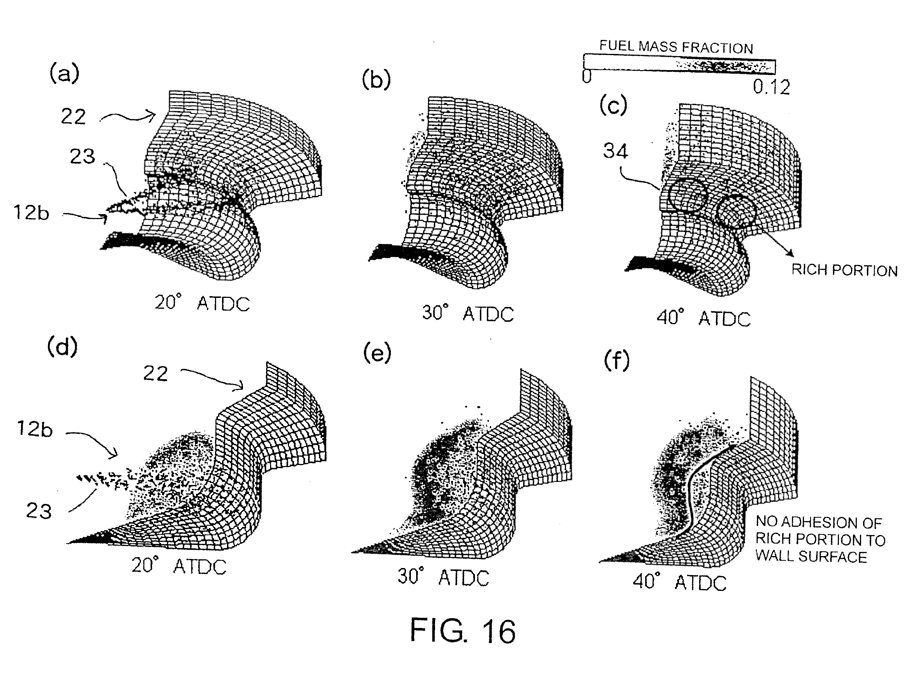

When normal combustion is performed by injecting the fuel spray 23 having a high penetration force by an injector having the nozzle holes 13a having a diameter of about 0.13 mm, the fuel spray 23 collides heavily against the cylinder wall, and a fuel-rich portion is readily formed locally. In the above case, the results obtained by calculating the fuel mass fraction in the cylinder (the cavity portion 12b and the squish area 22) at full load operation are shown in FIGs. 16(a) to (c). FIG. 16(a) shows a fuel mass fraction 20˚ after compression top dead center, FIG. 16(b) shows a fuel mass fraction. 30˚ after compression top dead center, and FIG. 16(c) shows a fuel mass fraction 40˚after compression top dead center. For calculation, it is determined that the nozzle holes 13a have a diameter of 0.13 mm, the number of the nozzle holes 13a is 10, the engine rotational speed is 3200 rpm, the swirl ratio is 1.9, and the fuel injection starting time is 4˚ before compression top dead center. As shown in FIG. 16(c), a fuel-rich portion 34 is locally formed. On the other hand, the injector 13 having the nozzle holes 13a having a small diameter of 0.09 mm or less can suppress collision of the fuel spray 23 against the cylinder wall, because the penetration force of the fuel spray 23 is decreased. The results obtained by calculating the fuel mass fraction in the cylinder (the cavity portion 12b and the squish area 22) at the full load operation in the above case are shown in FIGs. 16(d) to (f). FIG. 16(d) shows a fuel mass fraction 20˚ after compression top dead center, FIG. 16(e) shows a fuel mass fraction 30˚ after compression top dead center, and FIG. 16(f) shows a fuel mass fraction 40˚ after compression top dead center. For calculation, it is determined that the nozzle holes 13a have a diameter of 0.08 mm, the number of the nozzle holes 13a is 18, the engine rotational speed is 3200 rpm, the swirl ratio is 0, the Dcav/Dbore value is 0.71, and the fuel injection starting time is 16˚ before compression top dead center (the inclination angle θ of the spray axis 23a with respect to the standard spray axis 33 is 0˚ at the fuel injection starting time). As shown in FIGs. 16(d) to (f), the fuel spray 23 can be dispersed in a large range without forming the fuel-rich portion locally.

In the above description, selective performance of either the diffusion combustion or the premixed charge compression ignition combustion has been described. However, the Diesel engine according to this embodiment can also be applied to a case where only the diffusion combustion is performed without performing the premixed charge compression ignition combustion.

Although the modes of carrying out the present invention have been described above, the present invention is not limited to the embodiments described above, and it is to be understood that modifications and variations of the embodiments can be made without departing from the spirit and scope of the present invention.

REFERENCES NUMERALS LIST

10: diesel engine, 11: cylinder, 12: piston, 12a: top surface, 12b: cavity portion, 13: injector, 13a: nozzle holes, 14: intake port, 15: exhaust port, 16: reflux passage, 17: EGR control valve, 22: squish area, 23: fuel spray, 23a: spray axis. 24: squish flow (longitudinal vortex flow). 25: reverse, squish flow, 33; standard spray axis.

**Claims**

1. A diesel engine in which a cavity is formed in a top surface of a piston facing the interior of a cylinder and an injector is disposed to face the center portion of the cavity to inject fuel through its nozzle holes into the cylinder, wherein:

   when diffusion combustion is performed, a squish flow flows from a squish area between a portion on an outer peripheral side of the cavity in the piston top surface and a cylinder head into the cavity during the compression stroke, and the squish flow is generated top form in the cavity a longitudinal vortex flow, in which a flow at an upper portion in the cylinder has a velocity component directed inward in a radial direction of the cylinder and a flow at a lower portion in the cylinder has a velocity component directed outward in a radial direction of the cylinder;
   the injector injects the fuel from the nozzle holes to an outer peripheral portion of the cavity; and
   a ratio between the diameter of the cavity and the diameter of a cylinder bore falls within a range of 0.66 to 0.76.

2. The Diesel engine according to claim 1, wherein it is assumed that a standard spray axis connects the nozzle hole with an intersection between a straight line which is parallel to a cylinder central axis and passes through a maximum diameter position at a side surface of the cavity and a straight line which is perpendicular to the straight line and the cylinder central axis and passes through a maximum depth position at the bottom surface of the cavity, and when the fuel is injected from the nozzle hole, an inclination angle of a spray axis in the vertical direction of the cylinder with respect to the standard spray axis falls within a range of -1˚ to 5˚ when an inclination angle toward an upper part of the cylinder is defined as positive and an inclination angle toward a lower part of the cylinder is defined as negative.

3. A diesel engine in which a cavity is formed in a top surface of a piston facing the interior or a cylinder and an injector is disposed to face the center portion of the cavity so inject fuel through its nozzle holes into the cylinder, therein:

   when diffusion combustion is performed, a squish flow flows from a squish area between a portion on an outer peripheral side of the cavity in the piston top surface and a cylinder head into the cavity during the compression stroke, and the squish flow is generated two form in the cavity a longitudinal vortex flow, in which a flow at an upper portion in the cylinder has a velocity component directed inward in a radial direction of the cylinder and a flow at a lower portion in the cylinder has a velocity component directed outward in a radial direction of the cylinder;
   the injector injects the fuel from the nozzle holes to an outer peripheral portion of the cavity; and
   it is assumed that a standard spray axis connects the nozzle hole with an interjection between a straight line which is parallel to a cylinder central axis and passes through a maximum diameter position at a side surface of the cavity and a straight line which is perpendicular to the straight line and the cylinder central axis and passes through a maximum depth position at the bottom surface or the cavity, and when the fuel is injected from the nozzle hole, an inclination angle of a spray axis in the vertical direction of the cylinder with respect to the standard spray axis falls within a range of -1˚ to 5˚ when an inclination angle toward an upper part of the cylinder is defined as positive and an inclination angle toward a lower part of the cylinder is defined as negative.

4.  The diesel engine according to any one of claims 1 to 3, wherein the swirl ratio falls within a range of 1.0 or less.

5.  The diesel engine according to any one of claims 1 to 3, wherein the nozzle holes have a diameter of 0.10 mm or less.

6.  The diesel engine according to any one of claims 1 to 3, therein the nozzle holes have a diameter of 0.09 or less.

7.  The diesel engine according to any one of claims 1 to 3, therein the number of the nozzle holes falls within a range of 14 to 24.

8.  The diesel engine according to any one of claims 1 to 3, wherein a depth of the outer peripheral portion of the cavity is larger than that of the center portion.

9.  The diesel engine according to any one of claims 1 to 3, wherein either the diffusion combustion or the premixed charge compression ignition combustion is performed selectively.

10. A determination method of the diameter of the nozzle notes of the diesel engine according to any one of claims 1 to 3, wherein the diameter of the nozzle holes is determined according to a relationship between an indicated mean effective pressure at the premixed charge compression ignition combustion and the diameter of the nozzle holes.

FIG. 1

FIG. 2

FIG. 3

FIG. 4

FIG. 5A

FIG. 5B

FIG. 6A

FIG. 6B

FIG. 7

(a) Swirl=1.9

22

24

-5° ATDC

12b

(b) Swirl=1.0

22

24

-5° ATDC

12b

(c) Swirl=0.6

22

24

-5° ATDC

12b

EP 2 500 543 A1

11a

11

INTAKE FLOW

14          14

FIG. 8A

EP 2 500 543 A1

INTAKE FLOW

11a

11

14

14

FIG. 8B

FIG. 9A

$1\sim1.5D$

$n_D$

$D$

$\Delta P$

20

$\dot{m}$

FIG. 9B

MEASUREMENT AT
1 mm INTERVAL

VALVE LIFT [mm]

TDC

BDC

CRANK ANGLE $\alpha$ [deg. ATDC]

EP 2 500 543 A1

FIG. 10A

FIG. 10B

FIG. 11A

FIG. 11B

FIG. 12A

FIG. 12B

EP 2 500 543 A1

FIG. 13

FIG. 14

24

FIG. 15A

FIG. 15C

FIG. 15B

FIG. 16

<br>

**INTERNATIONAL SEARCH REPORT**

| International application No. |
| --- |
| PCT/JP2010/070195 |

A. CLASSIFICATION OF SUBJECT MATTER
*F02B23/06*(2006.01)i, *F02F3/26*(2006.01)i, *F02M61/14*(2006.01)i, *F02M61/18*
(2006.01)i

According to International Patent Classification (IPC) or to both national classification and IPC

B. FIELDS SEARCHED

Minimum documentation searched (classification system followed by classification symbols)
F02B23/06, F02F3/26, F02M61/14, F02M61/18

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2009-68354 A (Kubota Corp.),<br>02 April 2009 (02.04.2009),<br>fig. 1<br>(Family: none) | 1-10 |
| Y | JP 11-336550 A (Toyota Central Research and Development Laboratories, Inc.),<br>07 December 1999 (07.12.1999),<br>claim 4<br>& US 6161518 A & EP 945602 A3<br>& DE 69907793 T2 | 1,2,4-10 |
| Y | JP 2000-220520 A (Komatsu Ltd.),<br>08 August 2000 (08.08.2000),<br>fig. 2<br>& US 6314933 B1 | 2-10 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 February, 2011 (04.02.11) | Date of mailing of the international search report<br>15 February, 2011 (15.02.11) |
| Name and mailing address of the ISA/<br>Japanese Patent Office | Authorized officer |
| Facsimile No. | Telephone No. |

Form PCT/ISA/210 (second sheet) (July 2009)

| INTERNATIONAL SEARCH REPORT | International application No. |
|---|---|
| | PCT/JP2010/070195 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 4-124427 A  (Nissan Motor Co., Ltd.),<br>24 April 1992 (24.04.1992),<br>fig. 2<br>(Family: none) | 4 |
| Y | JP 2002-97960 A  (Komatsu Ltd.),<br>05 April 2002 (05.04.2002),<br>paragraph [0023]<br>(Family: none) | 5,6 |
| Y | JP 2002-357129 A  (Toyota Motor Corp.),<br>13 December 2002 (13.12.2002),<br>paragraph [0011]; fig. 4<br>(Family: none) | 7 |
| Y | JP 2006-105046 A  (Isuzu Motors Ltd.),<br>20 April 2006 (20.04.2006),<br>claim 1; fig. 3<br>& US 2008/0221780 A1     & EP 1803918 A1<br>& WO 2006/038600 A1     & CN 101035978 A | 9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9287527 A
- JP 3751462 B

**Non-patent literature cited in the description**

- **KAZUHISA INAGAKI.** Universal Diesel Engine Simulator (UniDES) 1st Report: Phenomenological Multi-zone PDF Model for Predicting the Transient Behavior of Diesel Engine Combustion. *SAE Paper 2008-01-0843, Society of Automotive Engineers,* 2008
- **RYO KITABATAKE.** Expansion of premixed charge compression ignition combustion region by using electro-hydraulic derive camless valve system. *Proc. of annual congress of Society of Automotive Engineers of Japan,* May 2008